# EUROPÄISCHE PATENTANMELDUNG

(11) **EP 0 634 828 A1**
(43) Veröffentlichungstag der Anmeldung: **18.01.1995**
(21) Anmeldenummer: 94110643.7
(22) Anmeldetag: 08.07.1994
(51) Int. Cl.: H02K 5/22, H02K 5/14, H02K 5/15

(54) **Elektromotor, insbesondere Kommutatormotor mit einem Ständerblechpaket**

(30) Priorität: 10.07.1993 DE 4323065
(71) Anmelder: Licentia Patent-Verwaltungs-GmbH, D-60596 Frankfurt (DE)
(72) Erfinder: Pöpelt, Bernhard, D-26127 Oldenburg (DE); Hadeler, Dieter, D-26123 Oldenburg (DE)
(74) Vertreter: Vogl, Leo, Dipl.-Ing.

(57) **Zusammenfassung**

Eine vereinfachte Fertigungsmöglichkeit eines Polpaketes bei Kommutatormotoren mit einem Wicklungen tragenden Ständerblechpaket (3) wird dadurch geschaffen, daß zumindest eine der die stirnseitigen Endflächen des Ständerblechpaketes (3) tragenden Endscheiben (11) Anschlußgehäuse (37, 39) aufweist, in das die Enden der Wicklungen und elektrische Anschlußdrähte eingeführt sind. Eine einfache Kontaktierung dieses Polpaketes mit einem kundenspezifischen Steckergehäuse (73) wird erfindungsgemäß dadurch geschaffen, daß ein Lagerschild (19) aus einer vorkomplettierten Montagebaueinheit mit dem kundenspezifischen Steckergehäuse (73), mit Kohlebürsten (75, 77) und sonstigen Bauelementen besteht und mit dem Steckergehäuse (73) elektrisch verbundene Stecker (79, 81) aufweist, welche beim Aufsetzen des Lagerschildes (19) auf das Polpaket in die Anschlußgehäuse (37, 39) an der Endscheibe (11) zur automatischen Kontaktierung einführbar sind. Hierdurch wird ein einfaches und schnelles Durchschalten des Motors bei seiner Komplettierung erzielt.

## Beschreibung

Die Erfindung betrifft einen Elektromotor, insbesondere einen Kommutatormotor mit einem Ständerblechpaket, der im Oberbegriff des Patentanspruchs 1 angegebenen Art.

Bei bekannten Motorbauarten hat es sich für die Fertigung als nachteilig herausgestellt, wenn die Anschlußvorrichtung am Ende des Montagevorganges aus mehreren Einzelteilen getrennt zusammengefügt und die Anschlußdrähte der Starterwicklung damit verbunden werden müssen. Hierbei werden die von den Ständerwicklungen wegführenden Enden der die Wicklung bildenden Drähte mit Litzendrähten verbunden und dann an eine Stromquelle angeschlossen. Die Kontaktierung erfolgt hierbei über Krimpverbindungen. Außerdem werden die Litzen mittels Kabelbinder an den Spulen befestigt.

Auch ist bereits ein Verfahren für eine automatische Polpaketfertigung vorgeschlagen worden, bei der die Enden der Wicklungsdrähte in dafür vorgesehene Kammern vom Anschlaggehäuse abgelegt werden.

Der Erfindung liegt nun die Aufgabe zugrunde, einen Elektromotor, insbesondere einen Kommutatormotor mit einem Ständerblechpaket so zu gestalten, daß seine Montage in möglichst wenig Arbeitsgängen einfach erfolgen kann, um den dafür erforderlichen Kosten- und Zeitaufwand zu reduzieren. Diese Aufgabe wird durch die im Patentanspruch 1 gekennzeichneten Merkmale gelöst.

Die Vorkomplettierung des Lagerschildes einschließlich der Litzenführungen und des Tachogenerators kann kostengünstig erfolgen. Durch das Aufsetzen des Lagerschildes und das automatisch hergestellte Polpaket wird der Motor automatisch geschaltet. Durch diese Art der Kontaktierung kann den verschiedenen Kundenwünschen in Bezug auf unterschiedliche Stecker und Steckergehäuse auf einfachste Weise entsprochen werden. Die Verbindung des Lagerschildes mit dem Polpaket kann auch durch einen Automaten vorgenommen werden.

Weitere Einzelheiten des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen Schnitt durch den erfindungsgemäßen Elektromotor,
- Figur 2: eine Draufsicht auf ein Lagerschild des Elektromotors,

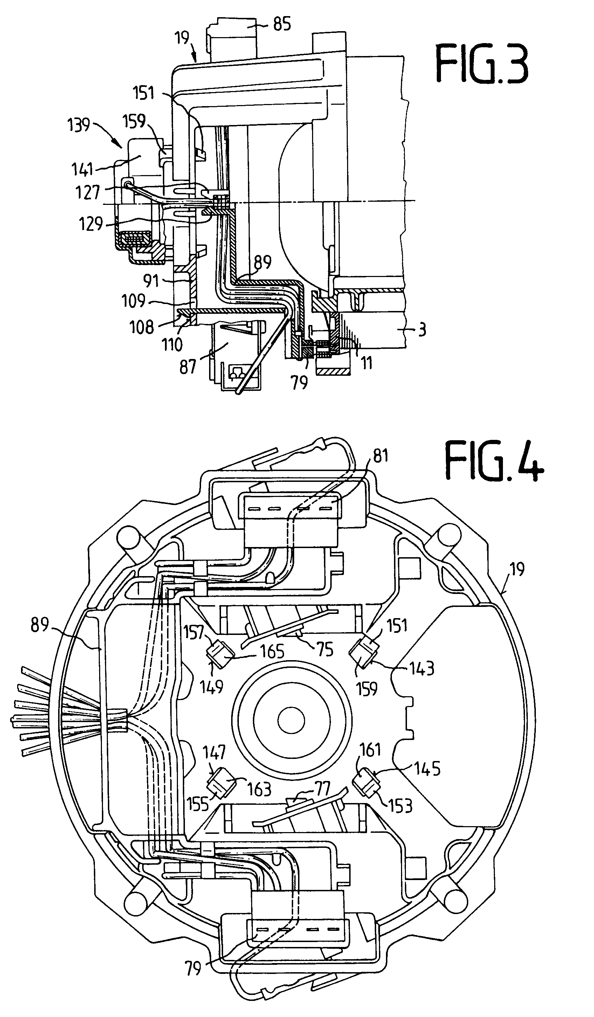

- Figur 3: eine Seitenansicht auf einen Teil des Elektromotors, teilweise im Schnitt,
- Figur 4: eine Draufsicht auf das Halteelement,
- Figur 5: eine Draufsicht auf eine Endscheibe eines Polpaketes und
- Figuren 6-8: verschiedene Ansichten des Halteelementes.

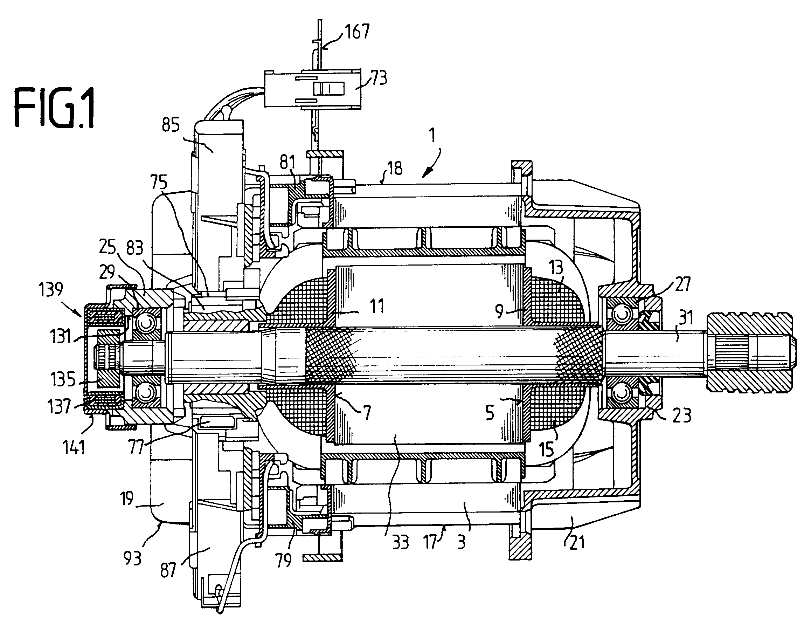

Die Figur 1 zeigt einen Schnitt durch einen Elektromotor, insbesondere durch einen Kommutatormotor 1 mit einem Ständerblechpaket 3 und mit an dessen stirnseitiger Endfläche 7 angeordneten, elektrisch isolierenden Endscheibe 11. Das Gehäuse weist zwei topfförmig ausgebildete Lagerschilde 19, 21 auf, die mittels Bundschrauben 17 miteinander verbunden sind. Diese Lagerschilde 19, 21 weisen je eine Lagerstelle 23, 25 für Kugellager 27, 29 auf, in welchen die Rotorwelle 31 mit einem Rotorblechpaket 33 drehbar gelagert ist.

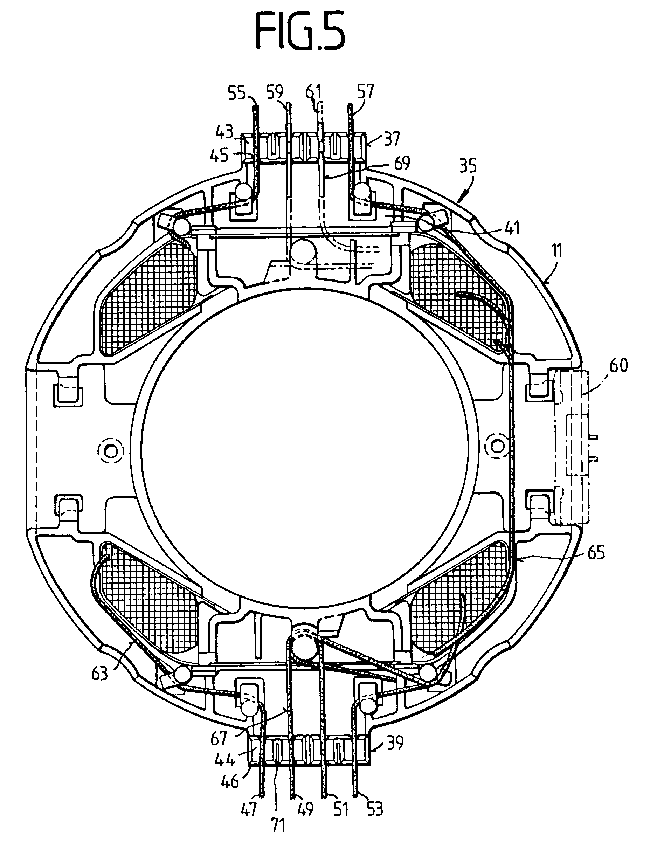

Die Figur 5 zeigt eine Draufsicht auf ein automatisch hergestelltes Polpaket 35 mit der Endscheibe 11 mit zwei Anschlußgehäusen 37, 39, welche diametral gegenüberliegend an dem äußeren Rand der freien Stirnfläche 41 angeordnet sind. Diese Anschlußgehäuse 37, 39 sind z.B. mit vier Kammern 43, 44 mit einseitig offenen Schlitzen 45, 46 versehen, über welche die freien Enden 47, 49, 51, 53, 55, 57, 59, 61 von Anschlußdrähten 63, 65, 67, 69 senkrecht zu ihrer Länge ablegbar sind. In diese Kammern 43, 44 sind in bekannter Weise Klemmen 71 eingesetzt, durch die die freien Enden 47, 49, 51, 53, 55, 57, 59, 61 der Anschlußdrähte 63, 65, 67, 69 sicher fixiert sind. Diese Klemmen 71 können aus Schneidkontakten bestehen, die die Isolierung der Wicklungsenden durchdringen und dadurch einen Kontakt zu den Sehnen der Wicklungsdrähte durchdringen.

Erfindungsgemäß wird nun eine einfache Möglichkeit für eine Kontaktierung zwischen dem kundenspezifischen Steckergehäuse 73 an dem Motorgehäuse und dem durch einen Automaten hergestellten Polpaket 35 dadurch geschaffen, daß ein Lagerschild 19 aus einer vorkomplettierten Montageeinheit mit dem kundenspezifischen Steckergehäuse 73, von Kohlebürsten 75, 77 und sonstigen Bauelementen besteht und mit dem Steckergehäuse 73 elektrisch verbundene Stecker 79, 81 aufweist, welche beim Aufsetzen des Lagerschildes 19 auf das Polpaket 35 in die Anschlußgehäuse 37, 39 an der Endscheibe 11 zur automatischen Kontaktierung einführbar sind. Durch das Aufsetzen des Lagerschildes 19, was voll automatisch erfolgen kann, wird der Kommutatormotor 1 geschaltet. Durch diese Art der Kontaktierung kann den verschiedenen Kundenwünschen in Bezug auf unterschiedliche Stecker und Steckergehäuse Rechnung getragen werden.

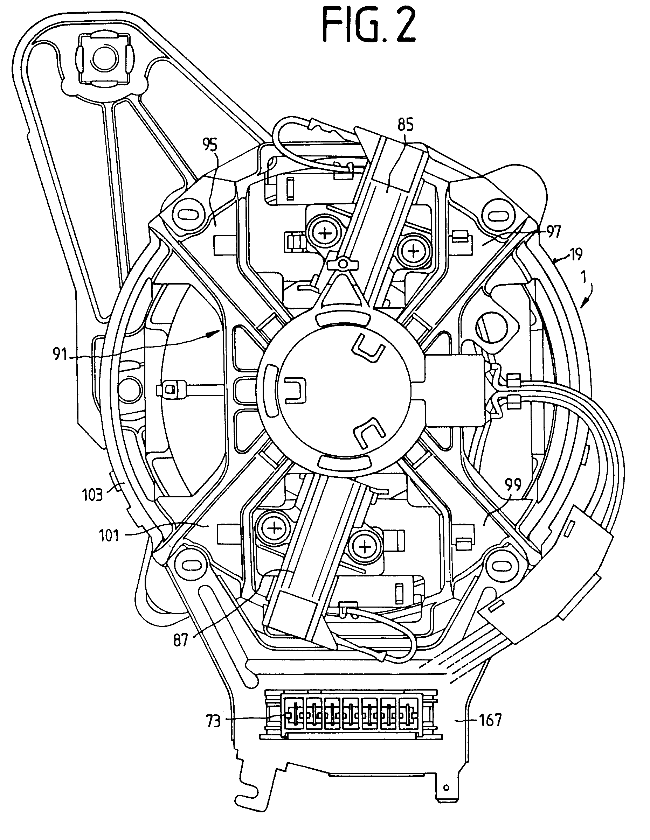

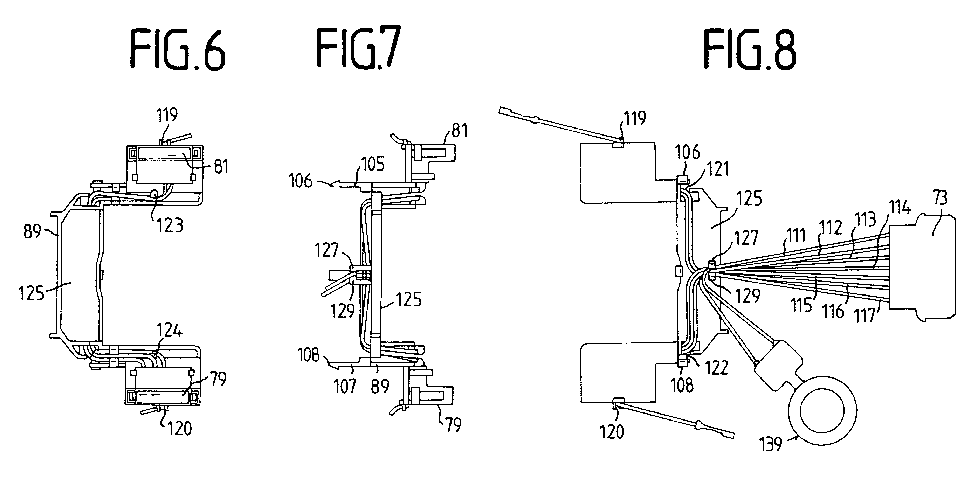

Die in dem Lagerschild 19 in Bürstenführungen 85, 87 abgefedert gelagerten Kohlebürsten 75, 77 wirken in bekannter Weise mit einem Kollektor 83 auf der Rotorwelle 31 zusammen, siehe Figur 1. Die Figur 2 zeigt eine Draufsicht auf das Polpaket 35 mit dem bereits aufgesetzten Lagerschild 19. Die Stecker 79, 81 sind an einem plattenförmig ausgebildeten Halteelement 89, das aus einem Kunststoffspritzteil besteht, integriert angeordnet, welches mittels einer Rastverbindung mit dem Lagerschild 19 verbunden ist. Das topfförmige Lagerschild 19 weist ein Bodenteil 91 auf, das über die Mantelfläche 93 bildende Verbindungsstreben 95, 97, 99, 101 mit einem konzentrisch zu dem Bodenteil 91 angeordneten Verbindungsflansch 103 zu dem Motorgehäuse 18 verbunden ist. Das aus einem Kunststoffspritzteil bestehende Halteelement 89 ist in das Lagerschild 19 einlegbar, wobei vorstehende Rastarme 105, 107 an dem Halteelement 89 mit Rastnasen 106, 108 hinter Rastkanten 110 von Rastausnehmungen 109 in dem Bodenteil 91 des Lagerschildes 19 verrastbar sind. Durch diese Knüpfverbindung ist eine einfache Montage des Halteelementes 89 an dem Lagerschild 19 gegeben. Das Halteelement 89 weist Führungselemente 119, 120, 121, 122, 123, 124 für die Anschlußlitze 111, 112, 113, 114, 115, 116, 117 zwischen dem Steckergehäuse 73 und den Steckern 79, 81 und zu den sonstigen Bauelementen auf. Außerdem ist das Halteelement 89 auf der Verbindungsfläche 125 zwischen den Steckern 79, 81 mit zwei gegeneinander federnden Haltestege 127, 129 zur Bündelung aller Anschlußlitzen 111, 112, 113, 114, 115, 116, 117 zu dem Steckergehäuse 73 versehen, siehe Figuren 7 und 8.

Das Lagerschild 19 weist weiterhin im Bodenteil 91 eine Durchtrittsöffnung 131 für einen an dem freien Ende 133 der Rotorwelle 31 angeordneten Impulsgeber 135 auf, welcher von einem diesem konzentrisch umgebenen Dreherkennungselement 137 eines Tachogenerators 139 abtastbar ist. Dieses Dreherkennungselement 137 ist von einer topfförmigen Abdeckkappe 141 umgeben, welche mittels einer Rastverbindung mit dem Lagerschild 19 verbunden ist. Zu diesem Zweck enthält das Bodenteil 91 konzentrisch zu der Durchtrittsöffnung 131 Rastausnehmungen 143, 145, 147, 149, hinter welche Rasthaken 151, 153, 155, 157 an den federnden Rastarmen 159, 161, 163, 165 der Abdeckkappe 141 verrastbar sind. Der Tachogenerator 139 wird übrigens vor der Verbindung des Lagerschildes 19 mit dem Polpaket 35 auf dem Lagerschild 19 fest montiert. Auch ist mit dem Lagerschild 19 ein Halteblech 167 verbunden, auf welchem das kundenspezifische Steckergehäuse 73 mittels Rastmittel fixiert gelagert ist.

Durch das einfache Aufsetzen des vorkomplettierten Lagerschildes 19 auf das Polpaket 35 wird der Motor auf einfachste Weise durchgeschaltet.

## Patentansprüche

1. Elektromotor, insbesondere Kommutatormotor mit einem Ständerblechpaket mit mindestens zwei ausgeprägten, aufgebrachte Wicklungen aufweisenden Polen und mit an dessen stirnseitigen Endflächen angeordneten, elektrisch isolierenden Endscheiben, an denen die Wicklungsköpfe der Wicklungen anliegen und von denen mindestens eine ein Anschlußgehäuse mit Kammern aufweist, in welchen die Enden der Wicklungen und der elektrischen Anschlußlitze des automatisch gefertigten Polpaketes abgelegt sind und mittels Klemmen gehalten werden, und mit einem kundenspezifischen Steckergehäuse, das außen an dem zwei Lagerschilde aufweisenden Motorgehäuse angeordnet und mit den Enden der Wicklungsdrähte und der Anschlußlitze zu den Kohlebürsten und sonstigen elektrischen Bauelementen verbunden ist**, dadurch gekennzeichnet,** daß ein Lagerschild (19) aus einer vorkomplettierten Montagebaueinheit mit dem kundenspezifischen Steckergehäuse (73), mit Kohlebürsten (75, 77) und mit sonstigen elektrischen Bauelementen besteht und mit dem Steckergehäuse (73) elektrisch verbundene Stecker (79, 81) aufweist, welche beim Aufsetzen des Lagerschildes (19) auf das Polpaket (35) in die Anschlußgehäuse (37, 39) an der Endscheibe (11) zur automatischen Kontaktierung einführbar sind.

2. Elektromotor nach Anspruch 1, **dadurch gekennzeichnet,** daß die Stecker (79, 81) an einem plattenförmig ausgebildeten Halteelement (89), das aus einem Kunststoffspritzteil besteht, integriert angeordnet sind, welches mittels einer Rastverbindung mit dem Lagerschild (19) verbunden ist.

3. Elektromotor nach Anspruch 2, wobei das Lagerschild topfförmig ausgebildet ist und im Bodenteil ein Lager für die Rotorwelle aufweist und daß das Bodenteil über die Mantelfläche bildende Verbindungsstreben mit einem konzentrisch zu dem Bodenteil angeordneten Verbindungsflansch zu dem Motorgehäuse verbunden ist, **dadurch gekennzeichnet,** daß das in das topfförmige Lagerschild (19) einlegbare Halteelement (89) vorstehende Rastarme (105, 107) aufweist, welche mit Rastnasen (106, 108) hinter Rastkanten (110) in Rastausnehmungen (109) des Bodenteiles (91) des Lagerschildes (19) verrastbar sind.

4. Elektromotor nach Anspruch 2 oder 3, **dadurch gekennzeichnet,** daß das Halteelement (89) Führungselemente (119, 120, 121, 122, 123, 124) für die Anschlußlitze (111, 112, 113, 114, 115, 116, 117) zwischen dem Steckergehäuse (73) und den Steckern (79, 81) und zu den sonstigen Bauelementen aufweist.

5. Elektromotor nach Anspruch 4, **dadurch gekennzeichnet,** daß das Halteelement (89) auf der Verbindungsfläche (125) zwischen den Steckern (79, 81) zwei gegeneinander federnde Haltestege (127, 129) zur Bündelung aller Anschlußlitze (111, 112, 113, 114, 115, 116, 117) zu dem Steckergehäuse (73) aufweist.

6. Elektromotor nach einem der vorhergehenden Ansprüche, **dadurch gekennzeichnet,** daß das Lagerschild (19) im Bodenteil (91) eine Durchtrittsöffnung (131) für einen an dem freien Ende (133) der Rotorwelle (31) angeordneten Impulsgeber (135), welcher von einem diesen konzentrisch umgebenen Dreherkennungselement (137) eines Tachogenerators (139) abtastbar ist.

7. Elektromotor nach Anspruch 6, **dadurch gekennzeichnet,** daß das Dreherkennungselement (137) von einer topfförmigen Abdeckkappe (141) umgeben ist, welche mittels einer Rastverbindung mit dem Lagerschild (19) verbunden ist.

8. Elektromotor nach Anspruch 7, **dadurch gekennzeichnet,** daß das Bodenteil (91) konzentrisch zu der Durchtrittsöffnung (131) Rastausnehmungen (143, 145, 147, 149) aufweist, hinter welche Rasthaken (151, 153, 155, 157) an den federnden Rastarmen (159, 161, 163, 165) der Abdeckkappe (141) verrastbar sind.

9. Elektromotor nach einem der vorhergehenden Ansprüche, **dadurch gekennzeichnet,** daß der Tachogenerator (139) vor der Verbindung des Lagerschildes (19) mit dem Polpaket (35) auf dem Lagerschild (19) fest montiert wird.

10. Elektromotor nach einem der vorhergehenden Ansprüche, **dadurch gekennzeichnet,** daß das kundenspezifische Steckergehäuse (73) an einem mit dem Lagerschild (19) verbundenen Halteblech (167) mittels Rastmittel fixiert gelagert ist.
